# EUROPÄISCHE PATENTSCHRIFT

(11) **EP 1 327 088 B1**
(45) Veröffentlichungstag und Bekanntmachung des Hinweises auf die Patenterteilung: **14.02.2007**
(21) Anmeldenummer: 01945349.7
(22) Anmeldetag: 10.07.2001
(51) Int. Cl.: F16H 61/00, F16H 15/38

(54) **STUFENLOSES REIBRADGETRIEBE**
INFINITELY VARIABLE FRICTION GEAR
TRANSMISSION A ROUES A FRICTION A VARIATION CONTINUE

(30) Priorität: 15.07.2000 DE 10034453
(43) Veröffentlichungstag der Anmeldung: 16.07.2003
(73) Patentinhaber: ZF FRIEDRICHSHAFEN Aktiengesellschaft, 88038 Friedrichshafen (DE)
(72) Erfinder: SICH, Bernhard, 88045 Friedrichshafen (DE); MATHEIS, Axel, 88605 Sauldorf (DE)
(86) Internationale Anmeldenummer: PCT/EP2001/007917
(87) Internationale Veröffentlichungsnummer: WO 2002/006706

(56) Entgegenhaltungen:
- EP-A- 1 048 878
- US-A- 5 607 372

## Beschreibung

Die vorliegende Erfindung betrifft ein stufenloses Reibradgetriebe nach dem Oberbegriff des Anspruchs 1. Aus der US 5607372 ist ein stufenloses Reibradgetriebe mit den Merkmalen des Oberbegriffes des Anspruches 1 bekannt.

Ein derartiges stufenloses Reibradgetriebe weist üblicherweise koaxial zu einer gemeinsamen Welle angeordnete Eingangs- und Ausgangsscheiben auf, die paarweise zueinander angeordnet sind und deren Innenflächen toroidförmig ausgestaltet sind, sowie zwischen den Paaren von Eingangs- und Ausgangsscheiben angeordnete Reibräder. Diese Reibräder stehen sowohl mit den Eingangsscheiben als auch mit den Ausgangsscheiben in Reibkontakt und übertragen das ihnen von der Eingangsscheibe übertragene Drehmoment auf die Ausgangsscheibe durch reibschlüssigen Kontakt, wobei die Drehzahl der Reibräder um so höher ist, je größer der Abstand zwischen ihrer Berührungsstelle mit der Eingangsscheibe und der Drehachse ist. Die Drehzahl der Ausgangsscheiben hingegen ist um so größer, je näher die Berührungsstelle zwischen Reibrad und Ausgangsscheibe an der Drehachse liegt. Durch Verschwenkung der Reibräder kann demzufolge die Drehzahl der Ausgangsscheibe stufenlos und beliebig eingestellt werden. Zu diesem Zweck sind die Drehachsen der Reibräder an einem Träger gelagert, der über eine Verschwenkeinrichtung ansteuerbar ist.

Ein stufenloses Reibradgetriebe ist in der DE A 197 54 725 der Anmelderin beschrieben. Dieses Getriebe weist eine Eingangswelle auf, die mit einem Drehmomentwandler oder einer naßlaufenden Anfahrkupplung einer Antriebsmaschine eines Kraftfahrzeuges verbunden ist, wobei es mit zwei koaxial zur Eingangswelle angeordneten Getriebeeinheiten versehen ist. Die Eingangsscheiben und die Ausgangsscheiben sind auf einer Drehmomentwelle gelagert, die geringfügig in Axialrichtung relativ zur Eingangswelle verschiebbar ist. Die beiden Eingangsscheiben sind dabei drehfest mit der Drehmomentwelle, jedoch axial gleitend, auf ihr gelagert. Eine rollenförmige Anpreßeinrichtung ist in Axialrichtung verschiebbar auf der Eingangswelle gelagert und drehfest mit ihr verbunden und beaufschlagt eine der Eingangsscheiben in Axialrichtung zur zugehörigen Ausgangsscheibe hin. Die oberen Enden der Träger, welche die Reibräder tragen, greifen in zwei Aussparungen im Gehäuse ein und sind dort drehbar gelagert, während ihre unteren Enden in Aussparungen in einer entsprechenden Halterung eingreifen und zwar unter Zwischenschaltung eines Hydraulikkolbens, der derart angeordnet ist, dass bei entsprechender Beaufschlagung der Kolbenoberseite bzw. der Kolbenunterseite eine geringfügige Anhebung bzw. Absenkung des entsprechenden Trägers erfolgt, wobei der Verschiebeweg üblicherweise etwa 2 mm beträgt. Die Reibräder selbst sind in Aussparungen in den Trägern eingesetzt und exzentrisch darin gelagert, wobei ein Exzenterabschnitt den zugehörigen Träger durchsetzt und der andere Exzenterabschnitt eines der Reibräder trägt. Diese exzentrische Lagerung dient der axialen Ausgleichsbewegung der Reibräder in Längsrichtung des Getriebes; durch die Auslenkbewegung des Exzenters wird ein Nachführen der Reibräder bei einer elastischen Verformung der Eingangs- bzw. Ausgangsscheiben ermöglicht, wobei diese Auslenkbewegung dabei eine Kreisbahn beschreibt. Diese Exzenterlagerung bedingt jedoch noch einen hohen Bauaufwand mit entsprechend großem Lagerbedarf, wobei durch die kreisförmige Auslenkbewegung des Exzenters Regelfehler auftreten können, welche ungewollte Übersetzungsverhältnisse bedingen.

Da die Verstellung der Übersetzung bei diesen stufenlosen Reibradgetrieben durch Verschiebung des Reibrades tangential zur Getriebeachse erfolgt, können noch Schwenkkräfte von den Antriebs- und Abtriebsscheiben auf das Reibrad einwirken, da diese zur Momentenübertragung an das Reibrad gepreßt werden müssen. Das Reibrad ist bei den bekannten stufenlosen Reibradgetrieben derart in jeder Getriebeeinheit angeordnet, dass seine Schwenkachse im Mittelpunkt des durch die zugehörigen Antriebs- und Abtriebsscheiben gebildete Torus angeordnet ist.

In den Kontaktpunkten des Reibrades mit der zugehörigen Antriebsscheibe bzw. Abtriebsscheibe werden sogenannte Normalkräfte bei der Verstellung der Übersetzung erzeugt. Damit das dadurch bedingte am Reibrad auftretende Drehmoment keine unerwünschte Veränderung der Getriebeübersetzung hervorruft, wurde bereits in der DE A 198 26 057 der Anmelderin vorgeschlagen, dass zur Steuerung der Übersetzung die Differenz der Normalkräfte, die durch die Anpreßkräfte der zugehörigen Ausgangsscheibe und Eingangsscheibe auf jedes Rad einwirken, durch Erzeugung einer Steuerkraft kompensiert wird, wobei bei axial gehaltenem Reibrad diese Steuerkraft, die zur Verdrehung des Reibrades führt, an einer der beiden zugehörigen Scheiben aufgebracht werden kann, während bei axialer Fixierung einer der Scheiben diese Steuerkraft auf das Reibrad einwirken kann.

Durch Verschiebung der Reibräder senkrecht zur Längsachse des stufenlosen Reibradgetriebes wirken Schwenkkräfte auf die Reibräder ein. Um eine einmal eingestellte Übersetzung konstant zu halten, müssen sich die Drehachsen der Reibräder und die Längsachse des stufenlosen Getriebes schneiden. Dieser stabile Zustand, der einer konstanten Übersetzung entspricht, kann bei den herkömmlichen stufenlosen Reibradgetrieben nur in einer Position des entsprechenden Reibrades (Y = 0) erreicht werden, d. h. im unverschobenen Zustand. In allen anderen Stellungen der Reibräder wirken die Schwenkkräfte auf diese ein.

Aufgabe der vorliegenden Erfindung ist es, ein stufenloses Reibradgetriebe, bei dem die Antriebsleistung über mehrere Reibräder geleitet wird, zu schaffen, das eine gleichmäßige Leistungsaufteilung und somit eine exakt gleiche Übersetzungstellung aller Leistungszweige aufweist mit verbessertem Verstellverhalten bezüglich Stabilität und Lastausgleich, sodass der Regelaufwand erheblich vereinfacht ist.

Ausgehend von einem stufenlosen Reibradgetriebe der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Erfindungsgemäß ist also vorgesehen, dass die Reibräder in kombinierten Axial-/Radial-Lagern drehbar gelagert sind, die aus in die Träger eingesetzten Schalenlagern bestehen, die um einen vorgesehenen Schwenkwinkel verdrehbar sind, dass die sich gegenüberliegenden Träger einer jeden Getriebeeinheit durch eine obere Kopplungsstange und eine untere Kopplungsschwinge miteinander verbunden sind und dass die untere Kopplungsschwinge mittig am Gehäuse für die Hydraulikkolben gelagert ist.

Die Träger sind vorteilhafterweise über Wälzlager mit der oberen Kopplungsstange und mit der unteren Kopplungsschwinge verbunden. Zwischen dem Hydraulikkolben und dem unteren Ende des Trägers kann vorzugsweise eine Ausgleichsanordnung vorgesehen sein.

Die erfindungsgemäße Anordnung der Reibräder in den kombinierten Axial-/Radial-Lagern sowie die Anordnung der Kopplungsstangen bzw. Kopplungsschwingen ermöglicht eine direkte Zuordnung von Auslenkweg zu Schwenkwinkel mit einem konstanten Übersetzungsverhältnis, sodass zum einen der Regelaufwand verringert wird und zum anderen ein besserer Lastausgleich zwischen den einzelnen Leistungszweigen erzielt wird.

Die Erfindung geht aus von der Erkenntnis, dass sich alle Reibräder im stabilen Zustand befinden müssen, um eine einmal eingestellte Übersetzung konstant halten zu können, d. h. dass die Drehachsen der Reibräder und die Längsachse des Getriebes einen gemeinsamen Schnittpunkt aufweisen müssen. Durch die erfindungsgemäße Ausgestaltung des Reibradgetriebes wird es ermöglicht, dass in jeder Y-Position des Reibrades dieses einen stabilen Zustand einnimmt.

Im folgenden wird die Erfindung anhand der Zeichnung näher erläutert, in der ein vorteilhaftes Ausführungsbeispiel dargestellt ist.
Es zeigen:
- Fig. 1: einen Radialschnitt durch eine Getriebeeinheit eines stufenlosen Reibradgetriebes,
- Fig. 2: einen teilweise aufgebrochenen Schnitt durch die Y-Z-Ebene,
- Fig. 3: einen teilweise aufgebrochenen Schnitt durch die Y-Z-Ebene und
- Fig. 4: eine schematische Darstellung verschiedener Stellungen eines Reibrades zur Erläuterung der Funktionsweise des Schwenkachsenwinkels.

Da stufenlose Reibradgetriebe dem Fachmann gut bekannt sind, werden im folgenden nur die für das Verständnis der Erfindung notwendigen Bauteile und ihre Funktionsweise beschrieben.

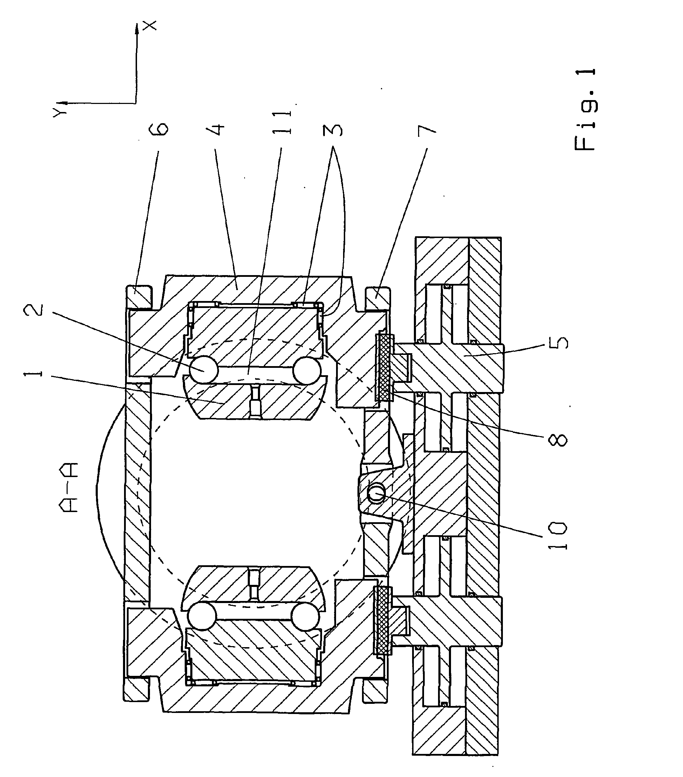

Wie der in Fig. 1 gezeigte Radialschnitt in der Y-X-Ebene durch eine Getriebeeinheit eines stufenlosen Reibradgetriebes erkennen läßt, sind Reibräder 1 in kombinierten Axial-/Radiallagern 2 drehbar gelagert. Das zur Übersetzungsverstellung notwendige Verschwenken der Reibräder 1 erfolgt durch Axial-/Radiallager, die aus zwei Schalenlagern 3 bestehen, die unter einem Winkel von 90° zueinander in entsprechenden Aussparungen in den Trägern 4 eingesetzt sind. Die Kräfte zur Momentenabstützung werden durch die Hydraulikkolben 5 am unteren Ende der Träger 4 aufgebracht.

Zur Abstützung der aus der Halbtoroidbauform entstehenden Reaktionskräfte sind jeweils zwei sich gegenüberliegende Träger durch eine obere Kopplungsstange 6 und eine untere Kopplungsschwinge 7 miteinander verbunden, wobei die Anbindung der Träger 4 an diese beiden Verbindungselemente 6, 7 über (nicht dargestellte) speziell ausgelegte Lagerstellen mit abwälzender Relativbewegung erfolgt.

Zum Ausgleich der durch die Anpressung der Eingangs- bzw. Ausgangsscheiben hervorgerufenen elastischen Verformungen der Bauteile sind Ausgleichsanordnungen 8 zwischen dem Hydraulikkolben 5 und dem Träger 4 vorgesehen, welche nur Relativbewegungen senkrecht zur Bewegung des Hydraulikkolbens 5 zulassen.

Die Verstellung der Übersetzung erfolgt durch Auslenkung der Reibräder in Y-Richtung. Dadurch werden die Reibräder 1 aus ihrem stabilen Zustand herausbewegt, sodass Kippkräfte auf diese einwirken, welche die Reibräder zum Verschwenken bringen.

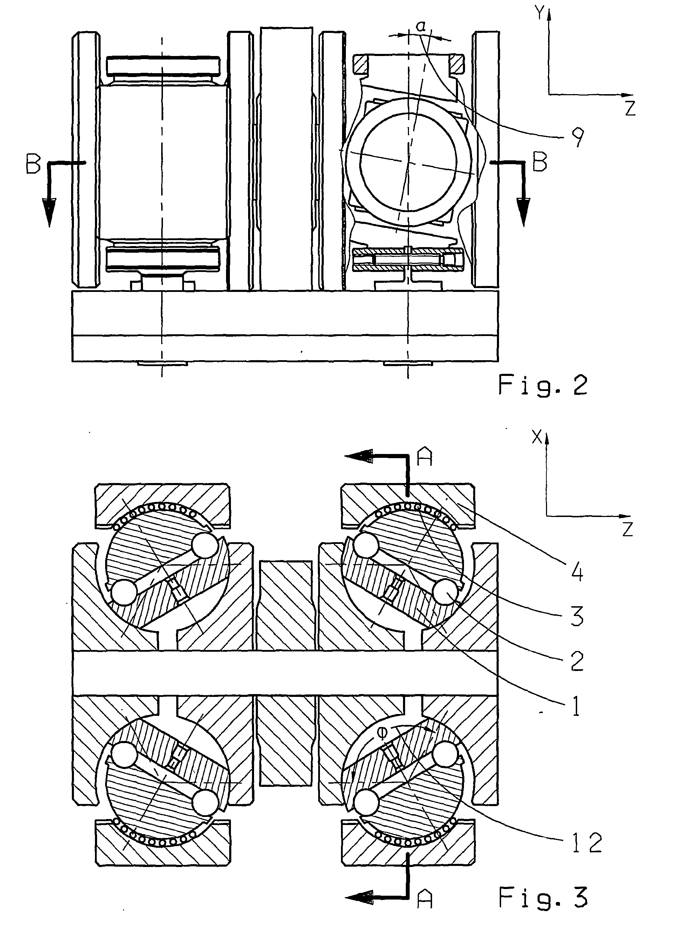

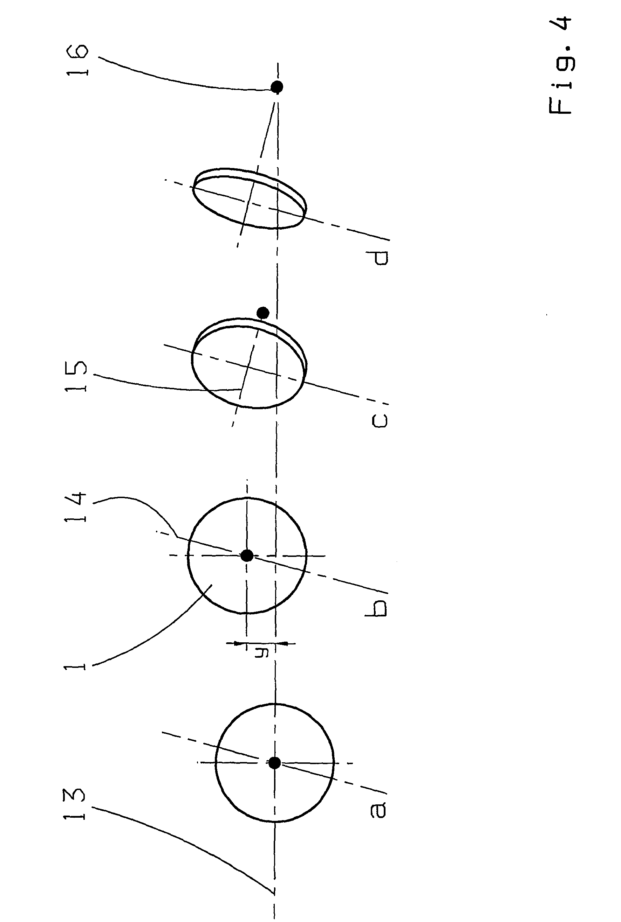

Um eine Abhängigkeit zwischen Auslenkung in Y-Richtung und Schwenkwinkel der Reibräder zu schaffen, sind die Schalenlager 3 in den Trägern 4 um einen bestimmten mit 9 bezeichneten Schwenkachsenwinkel α (Fig. 2) gegenüber der Y-Achse verdreht angeordnet. Durch diese Anordnung kann in jeder Y-Position der Reibräder unter einem vorgegebenen Schwenkwinkel entsprechend einer bestimmten Übersetzung der stabile Zustand erreicht werden, wie aus Fig. 4 hervorgeht. Dadurch kann jeder Y-Position der Reibräder genau ein Übersetzungsverhältnis zugeordnet werden. Dies bedeutet auch, dass die Reibräder nach erfolgter Übersetzungsverstellung nicht wieder in ihre Positon Y = 0 zurückgeführt werden müssen. Zur Regelung der Übersetzung reicht deshalb eine einzige Regelgröße aus, d. h. entweder die Erfassung des Schwenkwinkels oder der Y-Position.

Um den Lastausgleich zwischen den einzelnen Leistungszweigen zu verbessern, sind die Reibräder 1 bzw. deren Auslenkbewegung über die untere Kopplungsschwinge 7 mechanisch miteinander gekoppelt. Hierzu ist die Kopplungsschwinge 7 mittig bei 10 am Gehäuse für die Hydraulikkolben 5 gelagert. Diese Lagerung ist dabei so ausgeführt, dass sich die Reibräder in X-Richtung selbständig zwischen den Eingangs- und Ausgangsscheiben einer jeden Getriebeeinheit zentrieren können, jedoch in Y-Richtung miteinander gekoppelt sind. Durch die parallelartige Anordnung mit der mittigen Lagerstelle 10 wird zugleich gewährleistet, dass sich die Reibräder bei Auslenkung in Y-Richtung auf der vorgegebenen mit 11 bezeichneten Kontaktpunktbahn bewegen. Dadurch wird gewährleistet, dass sich der mit 12 bezeichnete Kontaktwinkel φ (Fig. 3) mit dem Auslenkweg nicht verändert.

Fig. 4a zeigt eines der Reibräder 1 im stabilen Zustand, d. h. in einer Position Y = 0, wobei mit 13 die Längsachse des stufenlosen Getriebes schematisch angedeutet ist.

In Fig. 4b ist das Reibrad 1 um den Betrag Y aus dem stabilen Zustand verschoben, wobei mit 14 die Schwenkachse des Reibrades 1 bezeichnet ist.

Fig. 4c zeigt, dass das Reibrad 1 verschwenkt worden ist, sich jedoch immer noch in einem instabilen Zustand befindet, da die Drehachse 15 des Reibrades 1 nicht die Längsachse 13 schneidet.

Fig. 4d läßt erkennen, dass das Reibrad einen stabilen Zustand einnimmt, da hierbei die Drehachse 15 des Reibrades 1 die Längsachse 13 schneidet (Schnittpunkt 16).

### Bezugszeichen

- 1: Reibrad
- 2: Axial-/Radial-Lager
- 3: Schalenlager
- 4: Träger
- 5: Hydraulikkolben
- 6: Kopplungsstange
- 7: Kopplungsschwinge
- 8: Ausgleichsanordnung
- 9: Schwenkachsenwinkel α
- 10: Lagerstelle der Kopplungsschwinge
- 11: Kontaktpunktbahn
- 12: Kontaktwinkel φ
- 13: Längsachse
- 14: Schwenkachse
- 15: Drehachse
- 16: Schnittpunkt

## Patentansprüche

1. Stufenloses Reibradgetriebe, mit:
einem Gehäuse,
einer Eingangswelle,
einer koaxial dazu angeordneten Drehmomentwelle,
zwei koaxial zur Eingangswelle angeordneten Eingangsscheiben mit toroidförmigen Innenflächen,
zwei koaxial zur Eingangswelle angeordneten Ausgangsscheiben mit toroidförmigen Innenflächen,
wobei je eine Eingangsscheibe und eine Ausgangsscheibe ein Paar bilden und die beiden Ausgangsscheiben spiegelsymmetrisch zueinander und nebeneinander angeordnet sind, mehreren Reibrädern (1), die zwischen den Innenflächen der Paare aus Eingangsscheiben und Ausgangsscheiben verschwenkbar angeordnet sind zur Übertragung eines Drehmomentes von der Eingangsscheibe auf die zugehörige Ausgangsscheibe,
einem Träger (4) für jedes Reibrad (1),
einer Verschwenkeinrichtung für die Träger (4) der Reibräder (1), einer Anpressanordnung für eine der Eingansgscheiben, um diese in Richtung Ausgangsscheiben zu beaufschlagen,
eine Ausgangswelle, und
einer Zahnradanordnung zwischen Ausgangsscheiben und Eingangswelle,
die Reibräder (1) in kombinierten Axial-/Radial-Lagern (3) drehbar gelagert sind, dass die sich gegenüberliegenden Träger (4) einer jeden Getriebeeinheit durch eine oberen Kopplungsstange und eine untere Kopplungsschwinge (7) miteinander verbunden sind und dass die untere Kopplungsschwinge (7) mittig (10) am Gehäuse für die Hydraulikkolben (5) gelagert ist , **daduch gekennzeichnet,** die Axial-/Radial-Lagern (3) aus in die Träger (4) eingesetzte Schalenlager (3) bestehen, die um einen vorgegebenen Schwenkachsenwinkel (α) gegenüber der Trägerachse verdreht sind.

2. Stufenloses Reibradgetriebe nach Anspruch 1, **dadurch gekennzeichnet, dass** die Träger über Lagerstellen mit abwälzender Relativbewegung mit der oberen Kopplungsstange (6) und mit der unteren Kopplungsschwinge (7) verbunden sind.

3. Stufenloses Reibradgetriebe nach einem der vorhergehenden Ansprüche, **dadurch gekennzeichnet, dass** zwischen dem Hydraulikkolben (5) und dem unteren Ende des zugehörigen Trägers (4) eine Ausgleichsanordnung (8) vorgesehen ist.

## Claims

1. The invention relates to a continuously variable friction gear with
a housing,
an input shaft,
a torque shaft arranged coaxially relative to the latter,
two input disks featuring doughnut-shaped inner surfaces and arranged coaxially relative to the input shaft,
with one input and one output disk forming a pair and the two output disks being arranged asymmetrically relative to each other and adjacent to each other,
several friction wheels (1) hinged between the inner surfaces of the pairs of input and output disks and transmitting torque from the input disk to the pertinent output disk, one carrier (4) for each friction wheel (1),
a swivel unit for the carriers (4) of the friction wheels (1), a pressing layout for pressing one of the input disks towards the output disks,
an output shaft and
a gearwheel layout between outputs disks and input shaft,
the friction wheels (1) being supported in combined axial/radial bearings (3), with the opposing carriers (4) of each transmission unit being linked to each other by an upper coupling bar and a lower coupling lever (7), and with the lower coupling lever (7) being supported on the center (10) of the housing for the hydraulic pistons (5), **characterized in that** the axial/radial bearings (3) consist of split bearings (3) turned by a specified swivel axis angle (α) relative to the carrier axis.

2. A continuously variable friction gear according to claim 1, **characterized in that** the carriers are linked to the upper coupling bar (6) and the lower coupling lever (7) via pivot points with seesawing relative motion.

3. A continuously variable friction gear according to one of the preceding claims, **characterized in that** a balancing system (8) is provided between the hydraulic piston (5) and the lower end of the pertinent carrier (4).

## Revendications

1. Transmission à roues à friction à variation continue, dotée de :
un carter,
un arbre d'entrée,
un arbre de couple disposé coaxialement par rapport à l'arbre d'entrée,
deux disques d'entrée avec des surfaces intérieures toroïdales et disposés coaxialement par rapport à l'arbre d'entrée,
deux disques de sortie avec des surfaces intérieures toroïdales et disposés coaxialement par rapport à l'arbre d'entrée,
sachant que, respectivement un disque d'entrée et un disque de sortie forment un ensemble et que les deux disques de sortie sont disposés symétriquement l'un par rapport à l'autre et qu'ils sont juxtaposés,
plusieurs roues à friction (1), disposées de façon pivotable entre les surfaces intérieures des ensembles composés de disques d'entrée et disques de sortie, pour transmettre le couple du disque d'entrée au disque de sortie associé,
un support (4) pour chaque roue à friction (1),
un dispositif de pivotement pour les supports (4) des roues à friction (1), un ensemble de serrage pour un des disques d'entrée, afin de le pressuriser dans la direction des disques de sortie,
un arbre de sortie et
un ensemble d'engrenages entre les disques de sortie et l'arbre d'entrée,
sachant que les roues à friction (1) sont montées en rotation dans des roulements axiaux/radiaux combinés (3), que les supports opposés (4) de chaque transmission sont liés l'un à l'autre par une tige d'accouplement supérieure et une bielle d'accouplement inférieure (7) et que la bielle d'accouplement inférieure (7) est logée au centre (10) du carter pour les pistons hydrauliques (5), **caractérisée en ce que** les roulements axiaux/radiaux (3) sont composés de roulements à cuvette (3) montés dans les supports (4) et tournés par rapport à l'axe du support d'un angle de pivotement prédéfini (α).

2. Transmission à roues à friction à variation continue selon la revendication 1, **caractérisée en ce que** les supports sont liés à la tige d'accouplement supérieure (6) et à la bielle d'accouplement inférieure (7) par l'intermédiaire de paliers à frottement décrivant un mouvement relatif.

3. Transmission à roues à fiction à variation continue selon une des revendications précédentes, **caractérisée en ce que** entre le piston hydraulique (5) et l'extrémité inférieure du support associé (4) est prévu un ensemble de compensation (8).
